# EUROPEAN PATENT APPLICATION

(11) **EP 4 510 308 A2**
(43) Date of publication of application: **19.02.2025**
(21) Application number: 24193775.4
(22) Date of filing: 09.08.2024
(51) Int. Cl.: H01M 10/613, H01M 10/625, H01M 10/6554, H01M 10/6556, H01M 10/6567, H01M 50/204, H01M 50/503

(54) **BATTERY PACK OF VEHICLE**

(30) Priority: 10.08.2023 KR 20230104955; 08.08.2024 KR 20240106206
(71) Applicant: Hyundai Motor Company, Seoul 06797 (KR); Kia Corporation, Seocho-gu Seoul 06797 (KR)
(72) Inventor: LEE, Yong Gyu, Seocho-gu, Seoul (KR); HONG, Sung Min, Seocho-gu, Seoul (KR)
(74) Representative: Hoffmann Eitle

(57) **Abstract**

A battery pack for a vehicle includes a plurality of battery modules; and a first cooling jacket having a flow path formed therein through which a cooling medium flows, wherein each of the plurality of battery modules includes a battery; and a power conversion module converting power of the battery, wherein the power conversion module is in close contact with one surface of the first cooling jacket, and the battery is in close contact with the other surface of the first cooling jacket.

## Description

### BACKGROUND

### 1. FIELD

The present disclosure relates to a battery pack for a vehicle.

### 2. DESCRIPTION OF RELATED ART

Generally, an eco-friendly vehicle may include a battery pack equipped with a plurality of batteries, a power conversion module (e.g., an inverter or a converter), and the like. The battery pack and the power conversion module may occupy a separate space, respectively, and a cooling device for providing a coolant to each thereof may be also installed separately, and components for connecting them may be configured very complexly.

In addition, cooling of both the battery and the power conversion module may be required when driving the eco-friendly vehicle, but cooling of the power conversion module may not be required when charging the battery. Therefore, if cooling capability of the power conversion module can be converted to cooling capability of the battery during charging the battery, the cooling of the battery may be focused upon, thus a charging speed may increase and stability may be secured.

However, in a structure of the existing cooling device, cooling devices may be installed for a battery pack and a power conversion module, respectively, and each of the cooling devices may operate independently. Accordingly, the cooling of the battery may not be focused on, and the charging speed may not increase and stability may not be secured during charging the battery.

### SUMMARY

An aspect of the present disclosure is to provide a battery pack for a vehicle capable of improving cooling performance of a battery and a power conversion module.

An aspect of the present disclosure is to provide a battery pack for a vehicle capable of simplifying a cooling structure and focusing on cooling of a battery during charging of the battery, to secure a charging speed and stability while reducing costs.

An aspect of the present disclosure is to provide a battery pack for a vehicle capable of differentially controlling cooling performance of a power conversion module and a battery.

According to an aspect of the present disclosure, a battery pack for a vehicle includes a plurality of battery modules; and a first cooling jacket having a flow path formed therein through which a cooling medium flows, wherein each of the plurality of battery modules includes a battery; and a power conversion module converting power of the battery, wherein the power conversion module is in close contact with one surface of the first cooling jacket, and the battery is in close contact with the other surface of the first cooling jacket.

According to an embodiment of the present disclosure, the battery pack may further include a second cooling jacket in close contact with lower surfaces of the plurality of battery modules and having a flow path formed therein through which a cooling medium flows.

According to an embodiment of the present disclosure, the battery and the first cooling jacket, the first cooling jacket and the power conversion module, and the second cooling jacket and the plurality of battery modules may be in close contact with each other through a heat transfer medium.

According to an embodiment of the present disclosure, a flow rate of the cooling medium flowing through the flow path formed in the second cooling jacket and a flow rate of a cooling medium flowing through the flow path formed in the first cooling jacket may be independently adjustable.

According to an embodiment of the present disclosure, each of the plurality of battery modules may further include a busbar connecting the battery and the power conversion module, and the first cooling jacket may have at least one opening through which the busbar passes.

According to an embodiment of the present disclosure, the busbar may have one side fastened to the battery through the opening, and the other side fastened to the power conversion module through the opening.

According to an embodiment of the present disclosure, the busbar may have a ' 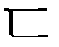 ' shape.

According to an embodiment of the present disclosure, the first cooling jacket may be formed as a single cooling jacket, or in a form in which a plurality of cooling jackets are connected.

According to an embodiment of the present disclosure, the power conversion module may include at least one of a DC/DC converter or a DC/AC inverter.

According to another aspect of the present disclosure, a battery pack for a vehicle includes a plurality of battery modules, a first cooling jacket having a flow path formed therein through which a cooling medium flows, and a second cooling jacket having a flow path formed therein through which a cooling medium flows, wherein each of the plurality of battery modules includes a battery; a power conversion module converting power of the battery; and a busbar connecting the battery and the power conversion module, wherein the power conversion module is in close contact with one surface of the first cooling jacket, and the battery is in close contact with the other surface of the first cooling jacket, and the plurality of battery modules are in close contact with an upper surface of the second cooling jacket.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a perspective view of a battery pack for a vehicle according to an embodiment of the present disclosure.
FIG. 2A is a view of the battery pack illustrated in FIG. 1 from the top.
FIG. 2B is a cross-sectional view of the battery pack illustrated in FIG. 1 from the side.
FIGS. 3A and 3B are views illustrating a flow path in a first cooling jacket according to an embodiment of the present disclosure.
FIG. 4 is a view illustrating a busbar according to an embodiment of the present disclosure.
FIG. 5 is a view illustrating a circuit of a battery module according to an embodiment of the present disclosure.

### DETAILED DESCRIPTION

Hereinafter, specific embodiments of the present disclosure will be described with reference to the accompanying drawings. The following detailed description is provided to aid in a comprehensive understanding of a method, a device and/or a system described in the present specification. However, the detailed description is for illustrative purposes only, and the present disclosure is not limited thereto.

In describing the embodiments of the present disclosure, when it is determined that a detailed description of a known technology related to the present disclosure may unnecessarily obscure the gist of the present disclosure, a detailed description thereof will be omitted. In addition, terms to be described later are terms defined in consideration of functions in the present disclosure, which may vary depending on intention or custom of a user or operator. Therefore, the definition of these terms should be made based on the contents throughout the present specification. The terminology used herein is for the purpose of describing particular embodiments only and is not to be limiting of the embodiments. As used herein, the singular forms are intended to include the plural forms as well, unless the context clearly indicates otherwise. As used herein, the terms "comprise," "include," "have," or the like, when used in the present specification, specify the presence of stated features, integers, steps, operations, elements, components or a combination thereof, but do not preclude the presence or addition of one or more other features, integers, steps, operations, elements, components, and/or groups thereof.

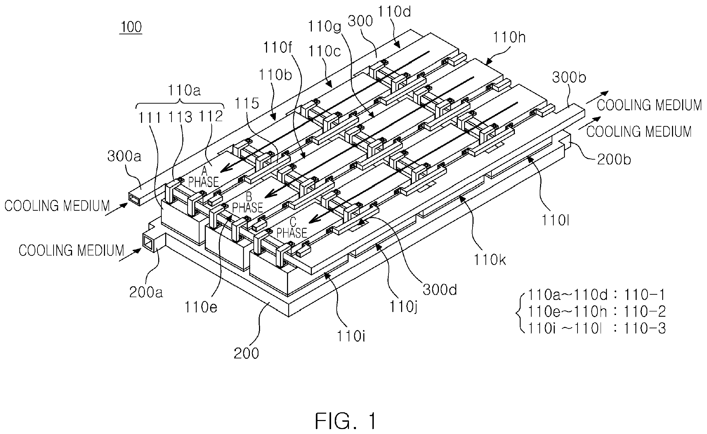

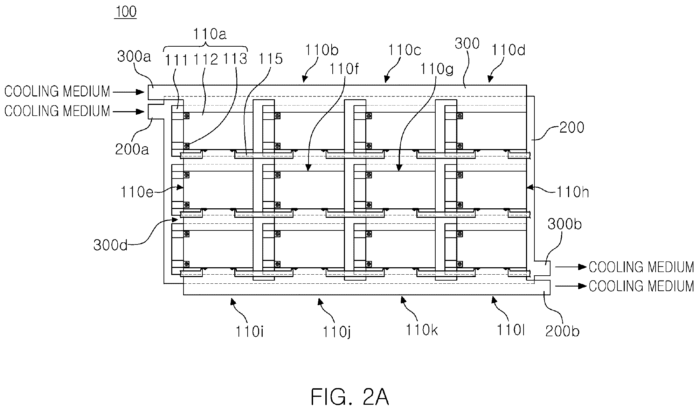

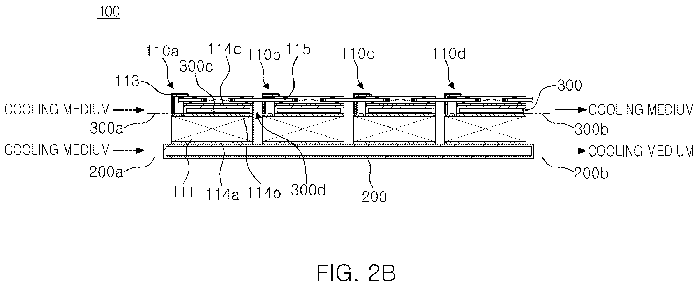

FIG. 1 is a perspective view of a battery pack for a vehicle according to an embodiment of the present disclosure. FIG. 2A is a view of the battery pack illustrated in FIG. 1 from the top, and FIG. 2B is a cross-sectional view of the battery pack illustrated in FIG. 1 from the side.

As illustrated in FIGS. 1 to 2B, a battery pack 100 of a vehicle according to an embodiment of the present disclosure may include a plurality of battery modules 110a, 110b, 110c, 110d, 110e, 110f, 110g, 110h, 110i, 110j, 110k, and 1101, a first cooling jacket 300, and a second cooling jacket 200. Although FIG. 1 illustrates 12 battery modules, this is illustrative to assist understanding of the present disclosure, and the number thereof may be at least two or more.

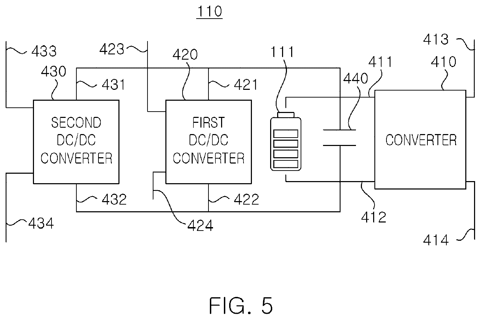

The plurality of battery modules 110a, 110b, 110c, 110d, 110e, 110f, 110g, 110h, 110i, 110j, 110k, and 1101 may include three single-phase battery systems 100-1, 100-2, and 100-3. The three single-phase battery systems 100-1, 100-2, and 100-3 may include AC system output terminals of three-phase (A-phase, B-phase, C-phase) configured by serially connecting inverter output terminals (see 413 and 414 of FIG. 5 described later) through a busbar 115. The AC system output terminals of the three-phase (A-phase, B-phase, C-phase) may output different AC voltages having the same magnitude and the same phase difference.

For example, the AC system output terminals of the three phases (A phase, B phase, C phase) may output different AC voltages with a phase difference of 120 degrees from each other. Therefore, the AC system output terminals of the three phases (A phase, B phase, C phase) may output three-phase AC voltages, and may provide a driving voltage to a motor using the three-phase AC voltage as the driving voltage.

The busbar 115 described above may be provided on a side surface of the battery module, and may be installed away from the first cooling jacket 300, not to contact the first cooling jacket 300, thereby allowing cooling by air cooling, but is not necessarily limited thereto. It is possible to configure the busbar 115 to come into contact with the first cooling jacket 300.

The plurality of battery modules 110a, 110b, 110c, 110d, 110e, 110f, 110g, 110h, 110i, 110j, 110k, and 110l may have the same structure. Hereinafter, structures thereof will be described with reference to FIGS. 1 to 2B, focusing on a battery module 110a.

The battery module 110a may include a battery 111, a power conversion module 112 converting power of the battery 111, and a busbar 113.

The second cooling jacket 200 may be in close contact with a lower surface of the battery module (110a, 110b, 110c, 110d, 110e, 110f, 110g, 110h, 110i, 110j, 110k, and 1101), and a flow path may be formed therein through which a cooling medium flows.

The cooling medium may be introduced through an inlet 200a, circulated across an entire second cooling jacket 200 along the flow path formed therein, and then discharged through an outlet 200b. In this case, the cooling medium may be a coolant, but other cooling mediums may also be applied in addition to the coolant.

The battery 111 may be in close contact with one surface of the first cooling jacket 300, the power conversion module 112 may be in close contact with the other surface of the first cooling jacket 300, and a flow path 300c through which the cooling medium flows may be formed in the first cooling jacket 300. Although the drawing illustrates that the battery 111 is in close contact with a lower surface of the first cooling jacket 300, and the power conversion module 112 is in close contact with an upper surface of the cooling jacket 300, it can be understood that, depending on an embodiment, the battery 111 may be in close contact with the upper surface of the cooling jacket 300, and the power conversion module 112 may be in close contact with the lower surface of the cooling jacket 300. The cooling medium may be introduced through an inlet 300a, circulated across an entire first cooling jacket 300 along the flow path formed therein, and then discharged through an outlet 300b.

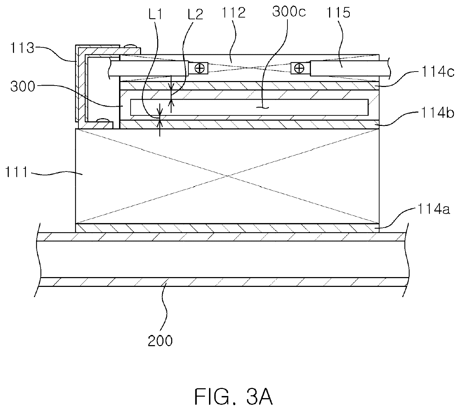

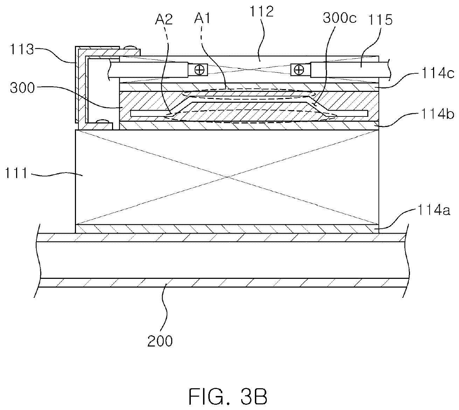

According to an embodiment of the present disclosure, thermal resistance between the first cooling jacket 300 and the battery 111 may be smaller than thermal resistance between the first cooling jacket 300 and the power conversion module 112. To this end, a distance between the flow path formed in the first cooling jacket and the battery may be configured to be shorter than a distance between the flow path formed in the first cooling jacket and the power conversion module, or an area of a flow path adjacent to the power conversion module, among the flow paths formed in the first cooling jacket, may be configured to be smaller than an area of a flow path adjacent to the battery (see FIGS. 3A and 3B below).

FIGS. 3A and 3B are views illustrating a flow path in a first cooling jacket according to an embodiment of the present disclosure.

Specifically, as illustrated in FIG. 3A, a distance L1 between a flow path 300c formed in a first cooling jacket 300 and a battery 111 may be shorter than a distance L2 between the flow path 300c formed in the first cooling jacket 300 and a power conversion module 112.

As illustrated in FIG. 3B, among flow paths 300c formed in the first cooling jacket 300, an area A1 of a flow path adjacent to the power conversion module 112 may be smaller than an area A2 of a flow path adjacent to the battery 111.

Alternatively, thermal resistance of a heat transfer medium 114b provided between the first cooling jacket 300 and the battery 111 may be smaller than thermal resistance of a heat transfer medium 114c provided between the first cooling jacket 300 and the power conversion module 112.

Through this configuration, cooling performance of the power conversion module and the battery may be differentially controlled.

Referring again to FIGS. 1 to 2B, the first cooling jacket 300 may be provided with at least one opening 300d through which the busbar 113 passes, and the busbar 113 may be connected to the battery 111 and the power conversion module 112 through the opening 300d.

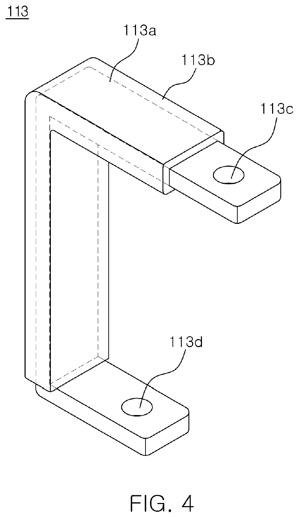

FIG. 4 is a view illustrating a busbar according to an embodiment of the present disclosure.

As illustrated in FIG. 4, a busbar 113 may include a conductor 113a such as copper, and an insulating medium 113b (e.g., an insulating coating or an insulating paper) for insulating the conductor 113a. One side of the busbar 113 may be screw-fastened to a battery 111 through a groove 113c, and the other side of the busbar 113 may be screw-fastened to a power conversion module 112 through a groove 113d. This busbar 113 may have a ' 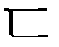 ' shape.

A second cooling jacket 200 and a plurality of battery modules 110a, 110b, 110c, 110d, 110e, 110f, 110g, 110h, 110i, 110j, 110k, and 110l, the battery 111 and a first cooling jacket 300, and the first cooling jacket 300 and the power conversion module 112 may be in close contact with each other via heat transfer media 114a, 114b, and 114c, respectively.

The heat transfer media 114a, 114b, and 114c may be provided as thermal grease or heat transfer pads.

A flow rate of a cooling medium flowing through a flow path formed in the second cooling jacket 200 and a flow rate of a cooling medium flowing through a flow path formed in the first cooling jacket 300 may be independently adjustable. To this end, a valve or a water pump (not illustrated separately) may be installed in an inlet 200a of the second cooling jacket 200 and an inlet 300a of the first cooling jacket 300, respectively, to independently control the flow rates of the cooling media. This is only an example of the present disclosure, and it is obvious that various implementations may be made according to the needs of those skilled in the art. Through such a configuration, cooling performance of the power conversion module and the battery may be differentially controlled.

The power conversion module 112 may be a device for converting power of the battery 111, and may include at least one of a DC/DC converter or a DC/AC inverter.

FIG. 5 is a view illustrating a circuit of a battery module according to an embodiment of the present disclosure. It should be noted that the circuit illustrated in FIG. 5 may be intended to assist understanding of the present disclosure, and the present disclosure is not limited to FIG. 5.

As illustrated in FIG. 5, a battery module 110 may include a battery 111, an inverter 410 connected to the battery 111, a first DC/DC converter 420, and a second DC/DC converter 430. Depending on an embodiment of the present disclosure, a common capacitor 440 may be further included. The inverter 410, the first DC/DC converter 420, and the second DC/DC converter 430 may correspond to a power conversion module of the present disclosure.

The battery 111 may output a battery voltage and may charge or discharge electric energy. In addition, the battery voltage may form a base voltage of the battery module 110 to provide an input voltage of the inverter 410, an input voltage of the first DC/DC converter 420, and an input voltage of the second DC/DC converter 430.

In addition, the battery 111 may have a battery voltage of a lower magnitude than a high-voltage battery pack applied to a conventional electric vehicle driving system. Therefore, a battery module 110 for a vehicle according to an embodiment of the present disclosure may apply a power conversion element that may operate at low voltage, to reduce manufacturing costs.

According to a battery module 110 according to an embodiment of the present disclosure, since various sizes and types of voltages may be output depending on a series/parallel combination of the battery modules 110, there may be advantages of being applicable to various vehicle models of specifications using a battery module 110 of a single standard, and reducing manufacturing costs.

For example, when the battery voltage is set to 100 V, a battery system outputting a voltage of 400 V may be formed by connecting four battery modules 110 in series, and a battery system outputting a voltage of 800 V may be formed by combining eight battery modules 110 in series. In addition, for example, when the battery voltage is set to 50 V, a battery system outputting a voltage of 400 V may be formed by connecting 8 battery modules 110 in series, and a battery system outputting a voltage of 800 V may be formed by connecting 16 battery modules 110 in series.

In addition, a single-phase battery system outputting a high-voltage AC voltage may be formed by connecting battery modules 110 in series and using an output of an inverter, and a three-phase AC voltage may be output by using the single-phase battery system in plural. In addition, a battery system in which a large current flows may be formed by combining battery modules 110 in parallel.

The inverter 410 may convert the battery voltage into an AC module voltage, and may output the same. The inverter 410 may include input terminals 411 and 412 and output terminals 413 and 414, and the input terminals 411 and 412 of the inverter may be connected in parallel to the battery 111 to receive the battery voltage, and the output terminals 413 and 414 of the inverter may output the AC module voltage. In the present specification, the output terminals 413 and 414 of the inverter may be referred to as an AC module output terminal that outputs the AC module voltage.

In addition, the first DC/DC converter 420 may convert the battery voltage into a first DC module voltage, lower than the battery voltage, and may output the same. The first DC module voltage may be set as a driving voltage of a low-voltage load. For example, the low-voltage load may be an electric load such as various lamps, a radio, an infotainment, or the like of an electric vehicle. The first DC module voltage may be set to 12V, 24V, or 48V, which may be the driving voltage of the low-voltage load. A magnitude of the voltage mentioned in the present specification may be only an embodiment, and may be set to voltages of various magnitudes depending on the design.

The first DC/DC converter 420 may include input terminals 421 and 422 and output terminals 423 and 424, and the input terminals 421 and 422 of the first DC/DC converter 420 may be connected in parallel to the battery 111 to receive the battery voltage, and the output terminals 423 and 424 of the first DC/DC converter 420 may output the first DC module voltage. In the present specification, the output terminals 423 and 424 of the first DC/DC converter 420 may also be referred to as a first DC module output terminal outputting the first DC module voltage.

In addition, the output terminals 423 and 424 of the first DC/DC converter 420 may be directly connected to the low-voltage load to provide the first DC module voltage.

In an embodiment, in the output terminals of the first DC/DC converter 420, one end (424) may be grounded, and the other end (423) may be connected to the low-voltage load to output the first DC module voltage. In another embodiment, both ends of the output terminal of the first DC/DC converter 420 may be connected to both ends of the low-voltage load to output the first DC module voltage.

In addition, the second DC/DC converter 430 may convert the battery voltage into a second DC module voltage, and may output the same. The second DC module voltage may be set to a higher value than the first DC module voltage output from the first DC/DC converter 420. In addition, the second DC module voltage may be less than or equal to the battery voltage, and may be greater than the battery voltage.

In addition, the second DC module voltage output from the second DC/DC converter 430 may be connected in series with the second DC module voltage output from a different battery module 110, to provide power to a high-voltage load. For example, the second DC module voltage output from the second DC/DC converter 430 may not provide power to the high-voltage load as a single output, but may be connected in series with the second DC module voltage of a different battery module 110, to provide power to a high-voltage load. Since the battery voltage included in the battery module 110 is configured as a low voltage, to provide a voltage to the high-voltage load such as an air conditioning system or the like, a plurality of battery modules 110 may be combined in series to provide a high voltage. For example, an output terminal of the second DC/DC converter 430 may be connected in series with an output terminal of the second DC/DC converter 430 of a different battery module, to form a high voltage and provide power to a high-voltage load.

In addition, the second DC/DC converter 430 may include input terminals 431 and 432 and output terminals 433 and 434, and the input terminals 431 and 432 of the second DC/DC converter 430 may be connected in parallel with the battery 111 to receive the battery voltage, and the output terminals 433 and 434 of the second DC/DC converter 430 may output the second DC module voltage. In addition, the output terminals 433 and 434 of the second DC/DC converter 430 in the present specification may also be referred to as a second DC module output terminal outputting the second DC module voltage.

In addition, the output terminals 433 and 434 of the second DC/DC converter 430 may be connected in series with output terminals of a second DC/DC converter 430 included in a different battery module, or may be connected to the high-voltage load.

The battery 111 may be configured to be connected in parallel with the input terminals 411 and 412 of the inverter 410, the input terminals 421 and 422 of the first DC/DC converter 420, and the input terminals 431 and 432 of the second DC/DC converter 430.

The common capacitor 440 may be connected in parallel with the battery 111, and may be configured to be connected in parallel with the input terminals 411 and 412 of the inverter, the input terminals 421 and 422 of the first DC/DC converter, and the input terminals 431 and 432 of the second DC/DC converter.

According to a battery module 110 according to an embodiment of the present disclosure, since one common capacitor may be shared without applying individual capacitors to an inverter and a converter, respectively, there may be an advantage of reducing a volume, and since a low-voltage capacitor may be applied, there may be an advantage of reducing production costs.

As described above, according to an embodiment of the present disclosure, a first cooling jacket may be added in a battery pack, and a power conversion module and a battery may be in close contact with one surface and the other surface of the first cooling jacket, respectively, to improve cooling performance of the battery and the power conversion module.

In addition, according to an embodiment of the present disclosure, power conversion modules such as an inverter and a converter may be gathered in a battery pack, and a cooling jacket may be disposed in the battery pack for cooling them, to simplify a cooling structure and focus on cooling of a battery during charging the battery, to secure a charging speed and stability while reducing costs.

In addition, according to an embodiment of the present disclosure, thermal resistance between a first cooling jacket and a battery may be configured to be smaller than thermal resistance between the first cooling jacket and the power conversion module, or a flow rate of a cooling medium flowing through a flow path formed in a second cooling jacket and a flow rate of a cooling medium flowing through a flow path formed in the first cooling jacket may be independently adjustable, to allow cooling performance of the power conversion module and the battery to be differentially controlled.

Although representative embodiments of the present disclosure have been described in detail above, those skilled in the art will understand that various modifications may be made to the above-described embodiments without departing from the scope of the present disclosure. Therefore, the scope of the rights of the present disclosure should not be limited to the described embodiments, but should be determined not only by the claims described below but also by equivalents of the claims.

According to an embodiment of the present disclosure, a first cooling jacket may be added in a battery pack, and a power conversion module and a battery may be in close contact with one surface and the other surface of the first cooling jacket, respectively, to improve cooling performance of the battery and the power conversion module.

In addition, according to an embodiment of the present disclosure, power conversion modules such as an inverter and a converter may be gathered in a battery pack, and a cooling jacket may be disposed in the battery pack for cooling them, to simplify a cooling structure and focus on cooling of a battery during charging the battery, to secure a charging speed and stability while reducing costs.

In addition, according to an embodiment of the present disclosure, thermal resistance between a first cooling jacket and a battery may be configured to be smaller than thermal resistance between the first cooling jacket and the power conversion module, or a flow rate of a cooling medium flowing through a flow path formed in a second cooling jacket and a flow rate of a cooling medium flowing through a flow path formed in the first cooling jacket may be independently adjustable, to allow cooling performance of the power conversion module and the battery to be differentially controlled.

While example embodiments have been illustrated and described above, it will be apparent to those skilled in the art that modifications and variations could be made without departing from the scope of the present disclosure as defined by the appended claims.

## Claims

1. A battery pack for a vehicle, comprising:
a plurality of battery modules; and
a first cooling jacket having a flow path formed therein through which a cooling medium flows,
wherein each of the plurality of battery modules includes:
a battery; and
a power conversion module converting power of the battery,
wherein the power conversion module is in close contact with one surface of the first cooling jacket, and the battery is in close contact with the other surface of the first cooling jacket.

2. The battery pack of claim 1, further comprising a second cooling jacket in close contact with lower surfaces of the plurality of battery modules and having a flow path formed therein through which a cooling medium flows.

3. The battery pack of claim 2, wherein the battery and the first cooling jacket, the first cooling jacket and the power conversion module, and the second cooling jacket and the plurality of battery modules are in close contact with each other through a heat transfer medium.

4. The battery pack of claim 2 or 3, wherein a flow rate of the cooling medium flowing through the flow path formed in the second cooling jacket and a flow rate of the cooling medium flowing through the flow path formed in the first cooling jacket are independently adjustable.

5. The battery pack of any one of the preceding claims, wherein each of the plurality of battery modules further comprises a busbar connecting the battery and the power conversion module, and
the first cooling jacket has at least one opening through which the busbar passes.

6. The battery pack of claim 5, wherein the busbar has:
one side fastened to the battery through the opening; and
the other side fastened to the power conversion module through the opening.

7. The battery pack of claim 5 or 6, wherein the busbar has a ' 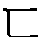 ' shape.

8. The battery pack of any one of the preceding claims, wherein the first cooling jacket is formed as a single cooling jacket, or as a form in which a plurality of cooling jackets are connected.

9. The battery pack of any one of the preceding claims, wherein the power conversion module comprises at least one of a DC/DC converter or a DC/AC inverter.

10. A battery pack for a vehicle, comprising:
a plurality of battery modules, a first cooling jacket having a flow path formed therein through which a cooling medium flows, and a second cooling jacket having a flow path formed therein through which a cooling medium flows,
wherein each of the plurality of battery modules includes:
a battery;
a power conversion module converting power of the battery; and
a busbar connecting the battery and the power conversion module,
wherein the power conversion module is in close contact with one surface of the first cooling jacket, and the battery is in close contact with the other surface of the first cooling jacket, and
the plurality of battery modules are in close contact with an upper surface of the second cooling jacket.
